**Europäisches Patentamt**

**European Patent Office**

**Office européen des brevets**

(19)

(11) Veröffentlichungsnummer: **0 479 053 B1**

(12) **EUROPÄISCHE PATENTSCHRIFT**

(45) Veröffentlichungstag der Patentschrift: **27.12.95**

(51) Int. Cl.⁶: **B29C 43/22**

(21) Anmeldenummer: **91115893.9**

(22) Anmeldetag: **19.09.91**

(54) **Verfahren zur Herstellung von hochverdichtetem Belagsmaterial aus Kunststoff**

(30) Priorität: **03.10.90 CH 3179/90**

(43) Veröffentlichungstag der Anmeldung:
**08.04.92 Patentblatt 92/15**

(45) Bekanntmachung des Hinweises auf die
Patenterteilung:
**27.12.95 Patentblatt 95/52**

(84) Benannte Vertragsstaaten:
**AT BE CH DE ES FR GB IT LI LU NL SE**

(56) Entgegenhaltungen:
EP-A- 0 046 526          BE-A- 676 607
DE-A- 3 545 159          FR-A- 1 069 103
GB-A- 1 175 064          US-A- 3 988 098
US-A- 4 375 350

(73) Patentinhaber: **FORBO-GIUBIASCO SA**
**Via Industrie 16**
**CH-6512 Giubiasco (CH)**

(72) Erfinder: **Pagani, Pierluigi**
**Via A. Nessi 28**
**CH-6600 Locarno (CH)**
Erfinder: **Bianchi, Roberto**
**Via Verbano 10**
**CH-6648 Minusio (CH)**

(74) Vertreter: **Patentanwälte Schaad, Balass &**
**Partner AG**
**Dufourstrasse 101**
**Postfach**
**CH-8034 Zürich (CH)**

**Beschreibung**

Die Erfindung betrifft ein Verfahren zur Herstellung von hochverdichtetem Belagsmaterial gemäss dem Oberbegriff von Anspruch 1 sowie eine Vorrichtung zur Durchführung des Verfahrens.

Hochverdichtete Bodenbeläge aus Kunststoff waren die Antwort auf die spitzen Absätze der Damen in den 50-iger und 60-iger Jahren. Solche hochverdichteten Flächengebilde besitzen eine homogene Struktur und haben mechanische Eigenschaften, die grossen Strapazen zu genügen vermögen; insbesondere eine hohe Abriebfestigkeit und eine hohe Rückstellelastizität. Sie können auch in leitfähiger Form hergestellt werden, was für verschiedene Anwendungen vorteilhaft ist.

Hochverdichtete homogene Bodenbeläge werden bisher in diskontinuierlichen chargenweisen Verfahren und chargenweise arbeitenden Pressen hergestellt. Dafür wird der stückige, z.B. in Form von Pelletts und Chips vorliegende, als Ausgangsmaterial verwendete Kunststoff in einen Behälter eingebracht. Auf diesen Behälter wird ein Deckel aufgelegt, und Behälter und Deckel werden zwischen den Platten einer Presse eingebracht. Gleichzeitig mit dem Zusammenpressen wird der Behälter auch erwärmt. Es wird immer mit einem Überschuss an Material gearbeitet, das beim Erreichen des vorgegebenen Materialvolumens zwischen Behälterrand und Deckel aus dem Behälter entweichen kann. Um Materialverluste zu minimalisieren und Ausschussware zu vermeiden, muss das Ausgangsmaterial vor jedem Pressvorgang genau eingewogen werden. Bei diesem Verfahren arbeitet man mit Drücken von 30 bis max. 50 bar. Es werden dabei Blöcke mit einer Dicke von z.B. 14 mm erhalten, die dann in dünnere Platten aufgespalten werden. Die einzelnen Platten werden geschliffen und getempert, in kleinere Grössen geschnitten und dann verlegt. Die erhaltenen Platten sind richtungsneutral, d.h. sie haben in alle Richtungen dieselben Eigenschaften. Diese Platten eignen sich als Bodenbelag, jedoch auch als Belagsmaterial für andere Zwecke, wo sie grosser Beanspruchung ausgesetzt werden, z.B. für die Ladefläche von Gabelstaplern. Das Belagsmaterial ist derart dauerhaft, dass die Verbindung zwischen Gabelstapler und Kunststoffbelag eher beschädigt wird, als der Kunststoffbelag selber. Nachteilig bei diesem Verfahren ist, dass das neben dem Einwägen jeder einzelnen Charge auch die Überführung des Pressgutes in die nacheinander angeordneten, voneinander unabhängigen Pressesäulen Personeneinsatz erfordert und daher wirtschaftlich aufwendig ist. Ausserdem können nur Belagsplatten bestimmter Grösse und mittlerer Dicke hergestellt werden. Weiterhin entsteht, wenn die Überführung des Pressgutes von einer Presssäule zur anderen nicht schnell genug erfolgt, Ausschussware, d.h. die Produktionsqualität ist stark von der Geschicklichkeit und Aufmerksamkeit des Bedienungspersonals abhängig.

Es ist auch ein kontinuierliches Verfahren bekannt, bei dem Bodenbeläge aus kalandrierten Folien durch Laminieren auf einer Stahlwalze hergestellt werden. Die verwendeten Folien müssen bereits in stark verdichteter Form vorliegen, d.h. dem Laminieren ist bereits ein energieintensiver Schritt des Verdichtens vorgelagert. Die laminierten Produkte haben als Folge des Kalandrierens in Längs- und Querrichtung unterschiedliche Eigenschaften. Ihre mechanischen Eigenschaften sind den homogenen gepressten Belägen unterlegen. Die Dicke dieser Bodenbeläge ist beschränkt, einerseits weil nur im allgemeinen 2-3 Folien von einer Decke von etwa bis zu 1 mm verwendet werden können, andererseits, weil auf der Laminierpresse nur - je nach Band- bzw. Walzenmaterial-mit Drücken von 2 bis 6 bar gearbeitet werden kann. Die für die Verbindung der Einzelfolien erforderliche Erwärmung ist bei mehreren Folien gegen die Mitte des Bodenbelages infolge der Eigenisolierung schwächer. Entsprechend ist die Schmelzverbindung zwischen den einzelnen Schichten beschränkt strapazierfähig. Da das Aufschmelzen des Materials in den Schichtgrenzbereichen Zeit erfordert, ist das Verfahren langsam.

Aus der EP-A-0 046 526 ist ein Verfahren zur kontinuierlichen Herstellung einer Bahn aus einem stückigen thermoplastischen Kunststoff bekannt. Der stückige Kunststoff wird in Form einer Schicht auf einem Transportband aufgebracht und erwärmt. Nach der Erwarmung wird der Kunststoff mit einem Doppelband zwischen die Pressplatten einer Schwingpresse eingeführt, wo er mit konstantem Druck verpresst wird. Die Qualität des erhaltenen Produktes entspricht nicht den hohen Anforderungen für stark strapazierte Bodenbelege.

Aufgabe der vorliegenden Erfindung ist es, ein Verfahren vorzuschlagen, das in einem automatisch, praktisch ohne Personaleinsatz ablaufenden Vorgang ein homogenes, dem bei chargenweisen Pressverfahren erhaltenen gleichwertiges Produkt liefert. Gelöst wird diese Aufgabe durch die Kombination der Merkmale gemäss dem kennzeichnenden Teil von Anspruch 1.

Doppelbandpressen der hier verwendeten Art sind bekannt. Sie unterscheiden sich jedoch in der Ausgestaltung ihrer Pressbänder und in ihrer Steuerung von den erfindungsgemäss verwendeten Doppelbandpressen. Die bekannten Doppelbandpressen werden zur Herstellung von Spanplatten verwendet. Spanplatten bestehen aus einer Mischung von Holzstückchen und einem Reaktionskleber. Holzstückchen und Klebstoff werden zu einer zusammenhängenden Masse vermischt, bei der die Holzstückchen in einer Klebstoffmatrix eingelagert sind. Die im Mischer erhaltene Masse wird vorverpresst und in Form gebracht. Dann wird die bereits geformte und gepresste Masse in die kontinuierlich arbeitende Presse eingeführt. Der aus der Presse austretende Schichtpressstoff ist nicht homogen, da die beiden äusseren Schichten stark, die Mitte hingegen weniger gehärtet ist. Entsprechend weist die Mitte einen geringeren Härtegrad als die Aussenschichten auf. Im Schichtpresstoff verbleibt ausserdem im mittleren Bereich Luft eingeschlossen. Der weiche mittlere Bereich und die eingeschlossene Luft stören hier nicht, da Spanplatten, im Gegensatz von Bodenbelägen, keiner grossen Belastung und vor allem keiner grossen Druckbelastung ausgesetzt sind.

Um ein homogenes Produkt zu erhalten wird erfindungsgemäss mit steigendem Druck gepresst, d.h. der Druck in der Kunststoffschicht wird kontinuierlich aufgebaut, damit zuerst die zwischen den stückigen Teilen vorhandene Luft herausgetrieben wird bzw. während dem Erwärmen und Zusammenpressen der bereits anschmelzenden Teilchen die Luft noch immer entweichen kann. Das erhaltene Produkt darf unter keinen Umständen Lufteinschlüsse enthalten. Vorzugsweise wird auch mit steigender Temperatur gearbeitet.

Nach der Erfindung wird entlang eines ersten Abschnittes der Doppelbandpresse die im entstehenden Belagsmaterial enthaltene Luft bei (langsamer) Temperaturerhöhung mittels steigendem Druck eliminiert, in einem anschliessenden zweiten Abschnitt wird das Belagsmaterial bei hoher Temperatur zur gewünschten Dichte verdichtet, worauf in einem dritten Abschnitt mit abnehmender Temperatur und gleichbleibendem oder steigendem Druck das erhaltene Belagsmaterial stabilisiert wird.

Sofern ein stückiges Kunststoffvorprodukt, z.B. ein Epoxydharz oder ein Polyester, verwendet wird, erfolgt die Reaktion zum gewünschten Kunststoff vorzugsweise im ersten Abschnitt, gegebenenfalls in den ersten zwei Abschnitten.

Die Dosierung des stückigen Kunststoffes oder Kunststoffvorproduktes kann z.B. mit perforierten Walzen mit Zellenrändern oder mit einem Silo mit regulierbarer Austrittsöffnung erfolgen. Wesentlich ist eine kontinuierliche genaue Dosierung.

Das stückige Kunststoffmaterial kann auf das untere Band der Doppelbandpresse als über die Breite gleich dicke Schicht oder als in der Mitte dickere Schicht, deren Dicke gegen die Ränder abnimmt, aufgebracht werden. Im zweiten Fall entsteht beim Anschmelzen und Verpressen eine Bewegung und Durchmischung des Materials, was für bestimmte z.B. dekorative Effekte ausgenützt werden kann.

Damit das kontinuierliche Verfahren überhaupt möglich ist, muss die Schicht des stückigen Ausgangsmaterial und später der Pressling seitlich parallel zur Laufrichtung der Maschine begrenzt sein. Dies kann durch ketten- oder fächerförmige kontinuierlich angeordnete Begrenzungslemente erfolgen. Diese Begrenzungselemente beschränken die seitlichen Abmessungen der Schicht und des fertigen Produktes und garantieren die gleichmässige Schichtdicke. Die Begrenzungselemente definieren zusammen mit den Bändern der Doppelbandpresse einen Raum, in dem während des erfindunsgemässen Verfahrens das Belagsmaterial gebildet wird. Die seitlichen Begrenzungselemente sind derart angeordnet, dass beim Zusammenpressen überflüssiges Material austreten kann. Ihre Höhe ist so zu bemessen, dass nach dem Fertigpressen die unteren Begrenzungselemente das obere Pressband nicht berühren und die oberen Begrenzungselemente das untere Pressband nicht berühren. Dieser Abstand ist erforderlich, damit die Maschine bei hohen Drücken keinen Schaden nimmt. Gleichzeitig kann dieser Abstand das Austreten von überflüssigem Material ermöglichen.

Die Qualität und das präzise Volumen des Presslings wird durch die genaue Steuerung der Dosierung und des steigenden Pressdruckes bzw. des Enddruckes bestimmt. Sowohl Steuerung der Dosierung, des Druckverlaufes als auch der Temperatur kann nach bekannten Verfahren erfolgen.

Als Ausgangsmaterial eignen sich stückige Kunststoffe oder Kunststoffvorprodukte. Die Form der Produkte kann Kugel, Scheiben, Granulat, Würfel oder sonstwie sein. Wenn Kunststoffvorprodukte verwendet werden, können diese in der Presse fertig reagieren. Selbstverständlich ist das Schmelzverhalten der Ausgangsmaterialien je nach Form und Material verschieden, so dass für unterschiedliche Formen oder Teilchengrössen die optimalen Bedingungen durch Vorversuche festgestellt werden müssen.

Als Kunststoffe kommen generell unter Druck und Wärme verformbare und verschmelzbare Materialien wie Polyvinylchlorid, Polyethylen, Polyurethan, Epoxydharze usw. in Frage. Die Kunststoffe können zur Erzielung von Farbeffekten bzw. antistatischen Eigenschaften Pigmente oder leitfähiges Material enthalten oder damit beschichtet sein.

Mit einer Doppelbandpresse können homogene Presslinge bis zu einem Druck von etwa 50 bar verpresst werden, d.h. es kann qualitativ ein gleichwertiges Material wie mit dem chargenweisen Verfahren erzielt werden.

Währenddem bei dem bekannten, kontinuierlichen Verfahren durch Laminieren der erhaltene Schichtpresstoff weiter zusammenpressbar ist, ist das gemäss dem erfindungsgemässen Verfahren erhaltene Belagsmaterial nicht mehr zusammenpressbar, d.h. es hat seine maximal mögliche Dichte erreicht. Diese

EP 0 479 053 B1

Dichte ist über die Dicke des Materials homogen, was bei Schichtpresstoffen nicht der Fall ist.

Durch das erfindungsgemässe Verfahren, bei dem Verdichten und Stabilisieren ohne Unterbruch aneinander anschliessen, wird die Entstehung von Ausschussware vermieden.

Durch das erfindungsgemässe Verfahren können z.B. hochverdichtete homogene Flächengebilde, z.B. mit einer Dicke bis zu 20 mm hergestellt werden. Durch das kontinuierliche Verfahren ist die Länge des Produktes nicht begrenzt, so dass praktisch Bodenbeläge beliebiger Länge hergestellt werden können, diese können aufgerollt in Bahnform gelagert und verlegt werden. Das Verlegen von Bahnen oder grösseren Platten ist schneller und weniger arbeitsintensiv.

Die erfindungsgemässen Produkte werden in erster Linie als Bodenbeläge verwendet; sie eignen sich jedoch auch als Wandbeläge, Tischbeläge oder andere stark strapazierte Beläge. Dabei spielt, neben den ausgezeichneten mechanischen Eigenschaften, auch die Leitfähigkeit eine Rolle.

Das erfindungsgemässe Verfahren ist auch weniger arbeitsintensiv, da, sobald nach Vorversuchen die optimalen Verfahrensbedingungen eingestellt sind, die Presse automatisch läuft und ein gleichmässiges Produkt liefert. Dies im Gegensatz zum chargenweisen Verfahren, wo jedesmal für jede Charge eingewogen, einzeln gepresst und der Presse das fertige Produkt, das in seiner Qualität variieren kann, einzeln entnommen werden muss.

Infolge der hohen Produktivität des erfindungsgemässen Verfahrens ist die Herstellung von dünneren Materialbahnen, z.B. von solchen mit einer Dicke von 6 mm wirtschaftlich. Dabei ist eine weitere Optimierung der Qualität und der Gleichmässigkeit der Bodenbeläge möglich. Gleichzeitig wird die Weiterverarbeitung und die Lagerung erleichtert.

Die Erfindung wird anhand von Figuren weiter veranschaulicht. Es zeigen rein schematisch:

Fig. 1: eine Seitenansicht einer erfindungsgemässen Anlage;

Fig. 2: eine Seitenansicht des eintrittseitigen Teils der Doppelbandpresse in der erfindungsgemässen Anlage;

Fig. 3: eine beschickungsseitige Vorderansicht der Doppelbandpresse; und

Fig. 4 und 5: schnittbildliche Darstellung von zwei Ausführungsformen des Doppelbandes der Presse.

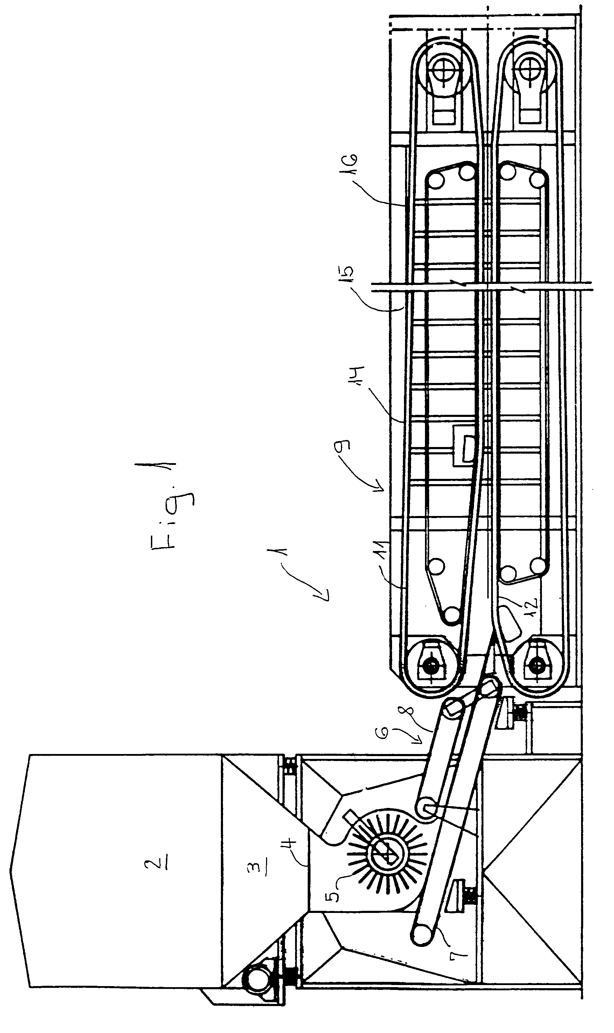

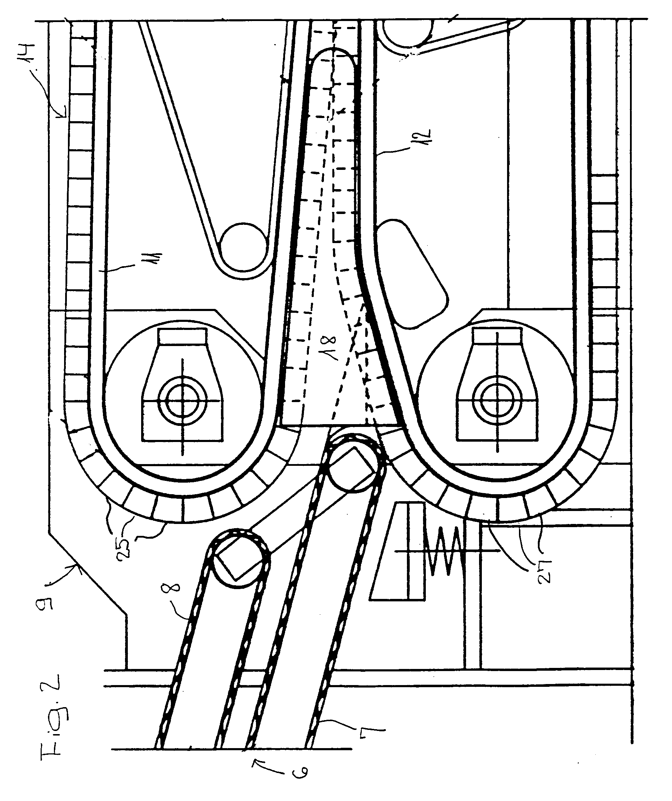

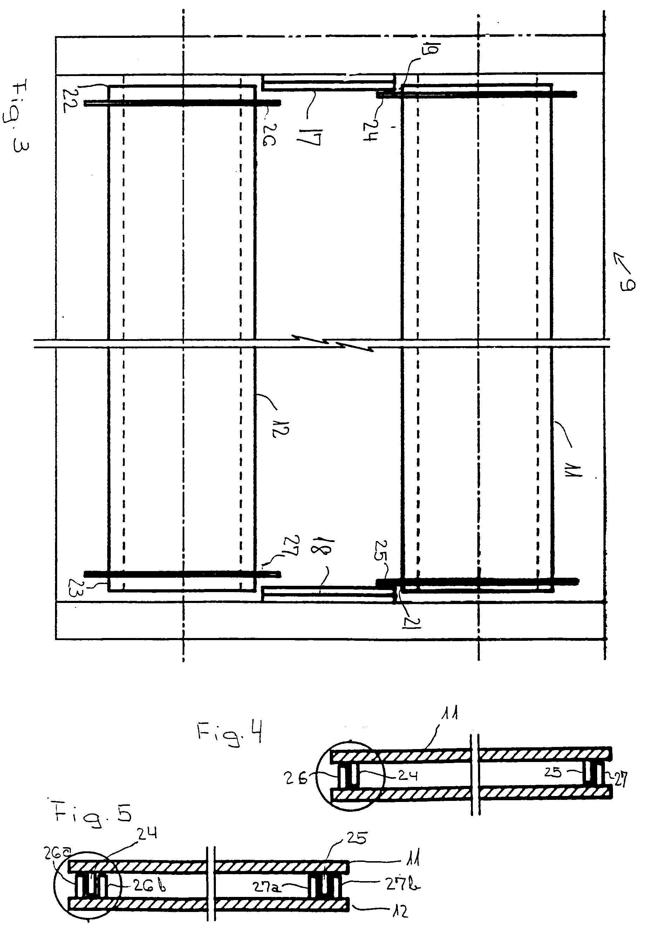

Die erfindungsgemässe Anlage 1 in Fig. 1 weist einen im wesentlichen zylindrischen Behälter 2 für den stückigen Kunststoff, der als Ausgangsmaterial verwendet ist, auf. Der Behälter 2 ist in seinem unteren Teil 3 trichterförmig ausgebildet und endet in einer Offnung 4, deren Weite steuerbar ist. Unterhalb der Offnung 4 ist ein Zellenrad 5 angeordnet, mit dessen Hilfe stückiger Kunststoff aus dem Behälter 2 auf eine Beschickungseinrichtung 6 dosiert wird. Die Beschickungseinrichtung 6 weist ein unteres und ein oberes Transportband 7,8 auf, mit deren Hilfe die gewünschte Kunststoffschicht vorgebildet wird. Anschliessend an diese Transprotbänder 7,8 ist, wie dies besonders gut in Fig. 2 ersichtlich ist, eine beheizbare Doppelbandpresse 9 angeordnet. Die Doppelbandpresse 9 besitzt zwei mit Druck beaufschlagte Pressbänder 11 und 12 sowie ein Heizsystem, das genauso wie der Druck in den drei Abschnitten 14,15,16 der Doppelbandpresse getrennt steuerbar ist. Am beschickungsseitigen Ende der Doppelbandpresse 9 sind beidseitig (Fig. 2, 3) Führungsbleche 17 und 18 angeordnet, die das Heraustreten von zugeführtem teilchenförmigem Kunststoff verhindern sollen. Dies ist an dieser Stelle besonders wichtig, da hier die Bänder 11, 12 der Doppelbandpresse in einem Winkel aufeinander zulaufen und Materialbewegung nicht ausgeschlossen ist. Entlang den beiden Rändern 19,21,22,23 der Bänder 11 und 12 sind Begrenzungsbleche 24,25,26,27 angeordnet, die die seitlichen Abmessungen der Kunststoffschicht bestimmen (Fig. 3, 4). Diese Begrenzungsbleche sind an den Bändern befestigt und werden von letzteren mittransportiert. Die Pressbänder 11, 12 als auch die Begrenzungselemente 24-27 sind vorzugsweise mit Teflon beschichtet, um ein Haften des Kunststoffes zu vermeiden.

Eine besondere Ausführungsform von Begrenzungsblechen ist in Fig. 5 dargestellt, bei der das untere Band 12 zwei parallele Reihen von Begrenzungsblechen 26a,26b,27a,27b aufweist, zwischen die, im zusammengepressten Zustand der Bänder, die Begrenzungsbleche 24 und 25 des oberen Bandes 11 eingreifen. Sowohl aus Fig. 4 als auch 5 ist es ersichtlich, dass die jeweiligen Begrenzungsbleche das entgegengesetzte Band auch unter höchstem Druck nicht berühren, so dass immer ein Abstand zwischen unterem Begrenzungsblech und oberem Band bzw. oberem Begrenzungsblech und unterem Band verbleibt. Dadurch kann überschüssiger Kunststoff an dieser Stelle entweichen. Die Begrenzungsbleche sind jeweils fest an einem Band angeordnet und weisen eine genügend kleine Länge auf, um die Umlenkung der Bänder 11 und 12 problemlos zu erlauben.

Die Erfindung wird anhand von Ausführungsbeispielen weiter veranschaulicht.

4

Beispiele 1 bis 3

| Beispiel | 1 | 2 | 3 |
|---|---|---|---|
| PVC | 45 | 50 | 55 |
| Weichmacher | 20 | 13 | 13 |
| Stabilisatoren | 2 | 1,5 | 1,5 |
| Füllmittel | 30 | 35 | 26 |
| Farbstoffe | 2 | -- | 4,4 |
| Hilfsstoffe | 1 | 0,5 | 0,1 |
| Abmessung der PVC-Schnitzel | 50x5 mm | 25x3 mm | 1x5 mm |

Alle Zahlenangaben liegen als Gew.-% vor.

Das Verpressen erfolgte in der dargestellten Doppelbandpresse. Die Heiztemperatur des ersten Abschnittes betrug 120°C, des zweiten Abschnittes 160° bis 180°C und des dritten Abschnittes 70° bis 80°C. Selbstverständlich ist die Temperatur des Materials im dritten Abschnitt höher als die Heiztemperatur, z.B. etwa 120°C. Es ist erwünscht, dass die Temperatur des Materials im dritten Abschnitt oberhalb der Glasumwandlungstemperatur liegt. Es wurde einmal im ersten und im zweiten Anschnitt mit einem Druck von 25 bar und im dritten Abschnitt mit 50 bar gearbeitet.

**Patentansprüche**

1. Verfahren zur kontinuierlichen Herstellung von hochverdichtetem Belagsmaterial aus einem stückigen Kunststoff oder Kunststoffvorprodukt, wobei mit dem stückigen Kunststoff oder Kunststoffvorprodukt eine kontinuierliche Schicht auf einem Transportband gebildet wird, die durch Einwirkung von Wärme und Druck verdichtet wird, dadurch gekennzeichnet, dass man den stückigen Kunststoff oder das stückige Kunststoffvorprodukt dosiert in einen durch seitliche Überlaufbegrenzungen gebildeten Bereich auf dem unteren Band in eine Doppelbandpresse einführt und unter Erwärmung mit steigendem Druck kontinuierlich verpresst, wobei man entlang eines ersten Abschnittes der Pressstrecke die im entstehenden Belagsmaterial vorhandene Luft entfernt.

2. Verfahren nach Anspruch 1, dadurch gekennzeichnet, dass man entlang eines ersten Abschnittes der Pressstrecke die im entstehenden Belagsmaterial vorhandene Luft unter steigendem Druck entfernt, entlang eines zweiten Abschnittes das Belagsmaterial zur gewünschten Dichte verpresst und entlang eines dritten Abschnittes das erhaltene Belagsmaterial stabilisiert.

3. Verfahren nach Anspruch 2, dadurch gekennzeichnet, dass man entlang des dritten Abschnittes der Pressstrecke mit gegenüber dem zweiten Abschnitt abnehmender Temperatur und gleichbleibendem oder steigendem Druck stabilisiert.

**4.** Verfahren nach einem der vorangehenden Ansprüche, dadurch gekennzeichnet, dass man den stückigen Kunststoff oder das stückige Kunststoffvorprodukt in Form einer Schicht konstanter Dicke auf dem unteren Band in die Doppelbandpresse einbringt.

**5.** Verfahren nach einem der Ansprüche 1 bis 3, dadurch gekennzeichnet, dass man den stückigen Kunststoff oder das stückige Kunststoffvorprodukt in Form einer Schicht, die in der Mitte eine grössere und gegen die Ränder eine abnehmende Dicke aufweist, auf dem unteren Band in die Doppelbandpresse einbringt.

**6.** Verfahren nach einem der vorangehenden Ansprüche, dadurch gekennzeichnet, dass man als Kunststoff Polyvinylchlorid, Polyethylen, Polypropylen oder Polyurethan und als Kunststoffvorprodukte Polyester oder Epoxydharze verwendet.

**7.** Verfahren nach einem der vorangehenden Ansprüche, dadurch gekennzeichnet, dass man einen ein leitfähiges Material, z.B. Russ, enthaltenden oder damit beschichteten Kunststoff verwendet.

**8.** Verfahren nach einem der vorangehenden Ansprüche, dadurch gekennzeichnet, dass man mit Drücken von 25 bis 50 bar verpresst.

**9.** Vorrichtung zur Durchführung des Verfahrens nach einem der vorangehenden Ansprüche mit einer Dosiereinrichtung (5) für stückiges Material und daran anschliessend einer beheizbaren Doppelbandpresse (9), dadurch gekennzeichnet, dass das untere Band (12) der Doppelbandpresse (9) entlang und parallel zu seinen beiden Rändern (22, 23) Begrenzungselemente (26, 27), die im zusammengepressten Zustand der Bänder das andere Band (12) nicht berühren, besitzt und die Doppelbandpresse zur Anwendung von steigendem Druck eingerichtet ist.

**10.** Vorrichtung nach Anspruch 9, dadurch gekennzeichnet, dass das untere und das obere Band (11) der Doppelbandpresse (9) entlang und parallel zu seinen beiden Rändern (19, 21) Begrenzungselemente (24, 25) aufweist.

**11.** Vorrichtung nach Anspruch 9 oder 10, dadurch gekennzeichnet, dass das untere oder das obere Band (11, 12) entlang seinen Rändern eine doppelte, beabstandete Reihe von Begrenzungselementen (26a, 26b, 27a, 27b) aufweist, zwischen die die Begrenzungselemente (24, 25) des anderen Bandes (12, 11) eingreifen.

## Claims

**1.** Method of continuously manufacturing high-density covering material from a plastic or plastic intermediate in piece form, the plastic or plastic intermediate in piece form being used to form on a transporting belt a continuous layer, which is compacted by the effect of heat and pressure, characterized in that the plastic in piece form or the plastic intermediate in piece form is introduced into a double-belt press into a region on the lower belt formed by lateral overflow limiting means and is continuously pressed with increasing pressure while being heated, the air present in the covering material produced being removed along a first section of the pressing zone.

**2.** Method according to Claim 1, characterized in that the air present in the covering material produced is removed under increasing pressure along a first section of the pressing zone, the covering material is pressed to the desired density along a second section and the covering material obtained is stabilized along a third section.

**3.** Method according to Claim 2, characterized in that the stabilizing is carried out along the third section of the pressing zone with a temperature decreasing with respect to the second section and a pressure remaining the same or increasing with respect to the second section.

**4.** Method according to one of the preceding claims, characterized in that the plastic in piece form or the plastic intermediate in piece form is introduced into the double-belt press in the form of a layer of constant thickness on the lower belt.

5. Method according to one of Claims 1 to 3, characterized in that the plastic in piece form or the plastic intermediate in piece form is introduced into the double-belt press in the form of a layer which has a greater thickness in the middle and a decreasing thickness towards the edges on the lower belt.

6. Method according to one of the preceding claims, characterized in that polyvinyl chloride, polyethylene, polypropylene or polyurethane is used as plastic and polyester or epoxy resins are used as plastic intermediates.

7. Method according to one of the preceding claims, characterized in that a plastic containing a conductive material, for example carbon black, or coated therewith is used.

8. Method according to one of the preceding claims, characterized in that pressing is performed at pressures of 25 to 50 bar.

9. Apparatus for carrying out the method according to one of the preceding claims, having a metering device (5) for material in piece form and, adjoining thereto, a heatable double-belt press (9), characterized in that the lower belt (12) of the double-belt press (9) has along the double-belt press (9) and parallel to its two edges (22, 23) limiting elements (26, 27) which, in the pressed-together state of the belts, does not touch the other belt (12), and the double-belt press is set up for the application of increasing pressure.

10. Apparatus according to Claim 9, characterized in that the lower belt (12) and the upper belt (11) of the double-belt press (9) have limiting elements (24, 25) along and parallel to their two edges (19, 21).

11. Apparatus according to Claim 9 or 10, characterized in that the lower belt (12) or the upper belt (11) has along its edges a double, spaced-apart row of limiting elements (26a, 26b, 27a, 27b), between which the limiting elements (24, 25) of the other belt (12, 11) engage.

**Revendications**

1. Procédé de fabrication continue de matériau de revêtement fortement densifié à partir de matière plastique ou d'avant-produit de matière plastique en morceaux, dans lequel avec la matière plastique ou l'avant-produit de matière plastique en morceaux est formée sur une bande transporteuse une couche continue qui est densifiée par l'action de chaleur et de pression, caractérisé par le fait qu'on introduit de manière dosée la matière plastique en morceaux ou l'avant-produit de matière plastique en morceaux dans une presse à double bande sur la bande inférieure dans une zone formée par des limites latérales à débordement et on le presse de façon continue avec pression croissante et chauffage, en enlevant le long d'une première partie du trajet de pressage l'air présent dans le matériau de revêtement en formation.

2. Procédé selon la revendication 1, caractérisé par le fait que le long d'une première partie du trajet de pressage, on enlève sous pression croissante l'air présent dans le matériau de revêtement en formation, le long d'une deuxième partie, on comprime le matériau de revêtement à la densité désirée, et le long d'une troisième partie, on stabilise le matériau de revêtement obtenu.

3. Procédé selon la revendication 2, caractérisé par le fait que le long de la troisième partie du trajet de pressage, on stabilise avec une température décroissante et une pression constante ou croissante par rapport à la deuxième partie.

4. Procédé selon l'une des revendications précédentes, caractérisé par le fait qu'on introduit la matière plastique en morceaux ou l'avant-produit de matière plastique en morceaux dans la presse à double bande sur la bande inférieure sous la forme d'une couche d'épaisseur constante.

5. Procédé selon l'une des revendications 1 à 3, caractérisé par le fait qu'on introduit la matière plastique en morceaux ou l'avant-produit de matière plastique en morceaux dans la presse à double bande sur la bande inférieure sous la forme d'une couche qui a une épaisseur plus grande au milieu et décroissante vers les bords.

6. Procédé selon l'une des revendications précédentes, caractérisé par le fait qu'on utilise comme matière plastique du polychlorure de vinyle, du polyéthylène, du polypropylène ou du polyuréthanne et comme avant-produits de matière plastique des polyesters ou des résines époxydes.

7. Procédé selon l'une des revendications précédentes, caractérisé par le fait qu'on utilise une matière plastique contenant une matière conductrice, par exemple de la suie, ou revêtue de celle-ci.

8. Procédé selon l'une des revendications précédentes, caractérisé par le fait qu'on presse avec des pressions de 25 à 50 bar.

9. Dispositif pour la mise en oeuvre du procédé selon l'une des revendications précédentes, comportant un dispositif de dosage (5) pour de la matière en morceaux suivi d'une presse chauffable à double bande (9), caractérisé par le fait que la bande inférieure (12) de la presse à double bande (9) comporte le long de ses deux bords (22, 23) et parallèlement à ceux-ci des éléments de limitation (26, 27) qui, lorsque les bandes sont serrées, ne touchent pas l'autre bande (11), et que la presse a double bande est équipée pour l'application d'une pression croissante.

10. Dispositif selon la revendication 9, caractérise par le fait que la bande inférieure et la bande supérieure (11) de la presse à double bande (9) présentent le long de leurs deux bords (19, 21) et parallèlement à ceux-ci des éléments de limitation (24, 25).

11. Dispositif selon l'une des revendications 9 et 10, caractérisé par le fait que la bande inférieure ou la bande supérieure (11, 12) présente le long de ses bords une double rangée écartée d'éléments de limitation (26a, 26b, 27a, 27b), entre lesquels s'engagent les éléments de limitation (24, 25) de l'autre bande (12, 11).

EP 0 479 053 B1

Fig. 1

Fig. 2

Fig. 3

Fig. 4

Fig. 5